# EUROPEAN PATENT APPLICATION

(11) **EP 4 108 431 A1**
(43) Date of publication of application: **28.12.2022**
(21) Application number: 21180894.4
(22) Date of filing: 22.06.2021
(51) Int. Cl.: B29C 70/46, B29C 70/34, B29C 35/04, B29C 35/02, B29C 33/02, B29C 33/56, B29C 43/52, B29C 31/08, B29C 33/30, B29C 43/34

(54) **A METHOD FOR PRODUCING A THERMOPLASTIC COMPOSITE COMPONENT**

(71) Applicant: Mitsubishi Chemical Advanced Materials NV, 8700 Tielt (BE)
(72) Inventor: The designation of the inventor has not yet been filed
(74) Representative: Schmauder & Partner AG Patent- & Markenanwälte VSP

(57) **Abstract**

A method for producing a thermoplastic composite component comprises the following steps:
a) providing a blank composed of a thermoplastic and reinforcement fibers;
b) heating the blank in an oven up to a temperature above the melting temperature of said thermoplastic;
c) pressing the heated blank in a mold which comprises cooperating first and second inner mold walls each having a predefined mold wall geometry, thereby forming a molded part having a shape corresponding to said predefined mold wall geometry;
d) cooling the molded part, whereby the thermoplastic composite component is obtained.
characterized in that
In order to improve process efficiency, it is proposed that at least during heating step b) and pressing step c), the blank is embedded between a first auxiliary tool and a second auxiliary tool, each auxiliary tool having a contact surface oriented towards the blank and a non-contact surface oriented away from the blank, said contact surfaces and said non-contact surfaces having a shape which substantially corresponds to said predefined mold wall geometry.

## Description

### Field of the invention

The present invention generally relates to a method for producing a thermoplastic composite component.

### Background of the invention

Composite components made of fiber-reinforced thermoplastics are increasingly used as molded parts in various fields of technology.

Currently, thermoplastic composites are commonly processed with a classical thermoforming process by heating in an IR oven or contact oven and then taken out from the oven, followed by transporting to and positioning in a forming tool and, finally, pressing. A difficulty of this type of processing is that during transportation from the IR oven or contact oven to the forming tool, the heated thermoplastic composite material cools down quickly. This cooling negatively effects both surface quality and impregnation quality.

Another processing method is the so-called variotherm process in which material is positioned into a tool while in a cold status followed by heating up and cooling down again under pressure. By avoiding the steps of transportation and positioning of the material in a tool, the negative aspects of separately heating and pressing are eliminated, but since heating and cooling are done in the same tool, the associated cycle times are very long.

### Description of the invention

In view of the above-mentioned disadvantages, it is an object of the present invention to provide an improved method for producing a thermoplastic composite component.

This object is achieved by the method defined in claim 1.

According to claim 1, a method for producing a thermoplastic composite component comprises the following steps:
a) providing a blank composed of a thermoplastic and reinforcement fibers;
b) heating the blank in an oven up to a temperature above the melting temperature of said thermoplastic;
c) pressing the heated blank in a mold which comprises cooperating first and second inner mold walls each having a predefined mold wall geometry, thereby forming a molded part having a shape corresponding to said predefined mold wall geometry;
d) cooling the molded part, whereby the thermoplastic composite component is obtained;
wherein,
at least during said heating step b) and pressing step c), the blank is embedded between a first auxiliary tool and a second auxiliary tool, each auxiliary tool having a contact surface oriented towards the blank and a non-contact surface oriented away from the blank, each contact surface having a shape which substantially corresponds to said predefined mold wall geometry.

In the present context, the term "thermoplastic composite component" shall be understood as a body comprising some kind of thermoplastic matrix including some kind of fibrous reinforcement structure. The term "component" shall include what could be called a "monolayer", i.e., a body having substantially the same composition and structure throughout its thickness. However, the term "component" shall also include bodies formed of two or more layers with different compositions and/or structures.

In the present context, the term "blank" is to be understood as an arrangement of a thermoplastic and reinforcement fibers in an unconsolidated state, i.e., in a condition in which no substantial formation of a thermoplastic matrix has occurred yet. It will be understood that the blank will generally be pre-cut or otherwise prepared so as to have a length and width corresponding to those of the composite component to be formed. Moreover, the blank will have a certain thickness - or a certain areal weight - in accordance with the characteristics of the composite component to be formed.

The term "heated" is to be understood in the sense that a temperature suitable for thermoplastic molding has been established. Therefore, any thermoplastic regions intended to be molded should be heated to a temperature above the respective thermoplastic melting temperature.

Depending on the thermoplastic material used, the pressing step c) is carried out at temperatures in the range of about 180ºC (for example when using polypropylene) to about 400ºC (for example when using PEEK) and at pressures from 0.1MPa up to 100 MPa.

The term "mold" shall be understood as an - optionally heatable - device which comprises cooperating first and second inner mold walls which are pressed against each other during the molding operation. As known in the field of compression molding, the mold walls each have a predefined mold wall geometry for forming a molded component having a shape corresponding to the predefined mold wall geometry. It will be understood that in practice one will generally define a desired geometry of the thermoplastic composite component to be produced, which then defines the corresponding geometry of the mold walls.

According to the invention, at least during said heating step b) and pressing step c), the blank is embedded between a first auxiliary tool and a second auxiliary tool. Each auxiliary tool has a contact surface oriented towards the blank and a non-contact surface oriented away from the blank, said contact surfaces and said non-contact surfaces having a shape which substantially corresponds to said predefined mold wall geometry. Each auxiliary tool is configured as a skin-type layer to be positioned in a contacting manner above and below the blank, respectively. In the present context, the term "tool" shall be understood to refer to a solid body which is configured to withstand any heating, cooling and pressing step that is applied during the process without undergoing substantial deformation or damage.

A primary effect of carrying out the heating and pressing steps with the auxiliary tools disposed above and below the blank is to avoid undesirable cooling of the heated blank when the latter is transferred from the oven to the mold. This protection against cooling allows implementation of a process in which the oven and the mold are separate devices, which allows each device to be independently configured and operated in accordance with its required task. This leads to faster cycle times and improved process efficiency. Moreover, use of the auxiliary tools prevents undesirable surface solidification of the thermoplastic when the heated blank is brought into contact with the mold. Use of the auxiliary tools also simplifies removal of the molded part after the pressing step.

Regarding specific dimensioning of the auxiliary tools, one has to start from the predefined geometry of the mold walls. Each auxiliary tool will then have a contact surface with a shape matching the mold wall geometry. The thickness and the desired shape of the auxiliary tool will then define the shape of its non-contact surface.

Advantageous embodiments of the invention are described below and defined in the dependent claims.

In many embodiments, the auxiliary tools embedding the blank are held together with appropriate brackets or equivalent mechanical means. In certain embodiments, a basically known release agent or film is applied between the blank and the auxiliary tools.

According to one embodiment (claim 2), the heating step b) is carried out in a contact oven, the contact oven comprising a first heating tool and a second heating tool, each heating tool having a heating surface which is oriented towards the embedded blank and which has a shape that substantially corresponds to said predefined mold wall geometry, namely to the shape of the non-contact surface of the auxiliary tool. Preferably, the contact oven allows application of a moderate contact pressure of typically about 0.01 to 10 MPa between the two heating tools, thereby shortening the necessary heating time. Such contact pressure application can be exploited to achieve a desired degree of consolidation in the heated blank.

According to another embodiment (claim 3), the heating step b) is carried out in a hot air oven. This oven type does not require any custom-formed heating tools and thus can be used in rapid succession for blanks with different shapes.

In certain embodiments the pressing step c) is carried out in an unheated mold, i.e., the heated blank is introduced into the mold, subjected to pressing and allowed to cool down. As mentioned above, the auxiliary tools disposed on both sides of the heated blank allow prevention of an undesirable early solidification before the pressing step stars. However, according to one embodiment (claim 4), the pressing step c) is carried out in a heatable mold maintained at a mold temperature above the melting temperature of said thermoplastic. This will allow to use thinner auxiliary tools, so that any cooling that occurs during transportation can be compensated with the heated surface of the mold. Advantageously, an arrangement with inductively heatable mold walls is used, which enables fast heating and cooling rates of the mold and accordingly shortens cycle times.

According to one embodiment (claim 5), the predefined mold wall geometry is substantially planar. Such geometry is applied in order to produce a thermoplastic composite component with a planar, plate-type shape.

According to another embodiment (claim 6), the predefined mold wall geometry comprises at least one discontinuity. For example, the mold wall can have at least one recess and/or at least one protrusion, which translate into a corresponding protrusion and/or recess, respectively, of the thermoplastic composite component. Such protrusions and recesses will generally extend by about 1 mm to 30 mm, particularly about 5 mm to 20 mm in a direction perpendicular to the wall plane. In other cases, the discontinuity comprises an edge region between two wall regions that are not co-planar. It shall be understood that the various edges and steps formed in the mold wall are not necessarily sharp in the geometric sense but instead can be provided with an appropriate curvature or rounding.

According to a further embodiment (claim 7), the auxiliary tools are made of a metal, particularly steel or aluminum, or of graphite.

According to another embodiment (claim 8), the auxiliary tools are made of a hybrid material selected from aluminum-graphite or steel-graphite.

The thickness of the auxiliary tools will depend on the overall size, the material used and the intended application. For example, they may be formed of a metallic sheet material having a layer thickness of about 1.0 to 10 mm.

According to yet another embodiment (claim 9), the auxiliary tools comprise a heating device.

In principle, for the method of the present invention a plurality of proven thermoplastics are available, the selection of which is within the scope of specialist knowledge. According to an advantageous embodiment (claim 10), the thermoplastic is selected from polypropylene (PP), polyetherimide (PEI), polyetheretherketone (PEEK), polyphenylene sulfide (PPS), polyamide (PA), polyaryletherketone (PAEK), polyether ketone ketone (PEKK), polycarbonate (PC), polyether sulfone (PES), polysulfone (PSU) and polyphthalamide (PPA).

For the selection of the reinforcing fibers there is also a plurality of proven fiber materials available. According to an advantageous embodiment (claim 11), the reinforcing fibers are selected from carbon fibers, glass fibers, natural fibers, aramid fibers, basalt fibers, and high-melting thermoplastic fibers. The term "high-melting thermoplastic fibers" refers to fibers made of a thermoplastic having a melting point above the working temperatures used in the heating and pressing process of the present invention.

It will be understood that the selection of the thermoplastics as well as of the fiber materials, and accordingly also the combination of thermoplastic and fiber material, are strongly influenced by the application field of the component to be produced.

A long-proven, cost-effective and reliable material combination is based on polypropylene as a thermoplastic and glass as the material of the reinforcing fibers. As a higher-quality material combination with mechanically outstanding properties and comparatively low weight, PEEK, PPS or PEI as thermoplastics and carbon fibers as the material of the reinforcing fibers can be used. Carbon fibers also offer the advantage of a stronger restoring force, i.e., a stronger loft effect, which favors the production of components with a highly porous core layer.

According to an exemplary embodiment (claim 12), the blank is an unconsolidated flexible fibrous nonwoven layer of 10 to 80 wt.-% fibers of said thermoplastic and 20 to 90 wt.-% of reinforcing fibers, the blank having an areal weight of 150 to 10'000 g/m².

According to other embodiments, the blank comprises a plurality of layers stacked on top of each other. For example, the blank may comprise one or several layers of a thermo-plast containing a reinforcement fabric in addition to one or several layers of a fibrous nonwoven layer of thermoplastic fibers and reinforcement fibers.

According to one embodiment (claim 13), the heating step b) is carried out while applying a pressure between the auxiliary tools which is sufficiently large to result in a fully consolidated, i.e., substantially poreless blank. In a variant of this embodiment (claim 14), the pressing step c) is carried out with a predefined end gap between the inner mold walls, whereby the resulting molded part is produced in a partially consolidated state, i.e., containing a certain amount of air pores.

According to a further embodiment (claim 15), the heating step b) is carried out while applying a pressure between the auxiliary tools which results in a first partially consolidated blank, and the pressing step c) is then carried out with a predefined end gap between the inner mold walls, whereby the resulting molded part is in a second partially consolidated state. Preferably, the resulting molded part has a density of 0.2 g/cm³ to 1 g/cm³.

### Brief description of the drawings

Examples of the invention will henceforth be described in more detail by reference to the drawings, which show:
- Fig. 1: a first variant of a known processing method, in a schematic representation, as a vertical section;
- Fig. 2: a second variant of a known processing method, in a schematic representation, as a vertical section;
- Fig. 3: a first embodiment of the processing method according to the present invention, in a schematic representation, as a vertical section; and
- Fig. 4: a second embodiment of the processing method according to the present invention, in a schematic representation, as a vertical section.

### Modes for carrying out the invention

It will be understood that the figures are not necessarily drawn to scale. In some instances, relative dimensions are substantially distorted for ease of visualization. Identical or corresponding features in the various figures will generally be denoted with the same reference numerals.

The present figures all show a schematic situation by means of a vertical section, wherein it is assumed that compression forces of the molding process are applied in vertical or "z" direction. For illustration purposes, the figures show the formation of a reinforced thermoplastic composite component having a single, step-like discontinuity along a central region of the component.

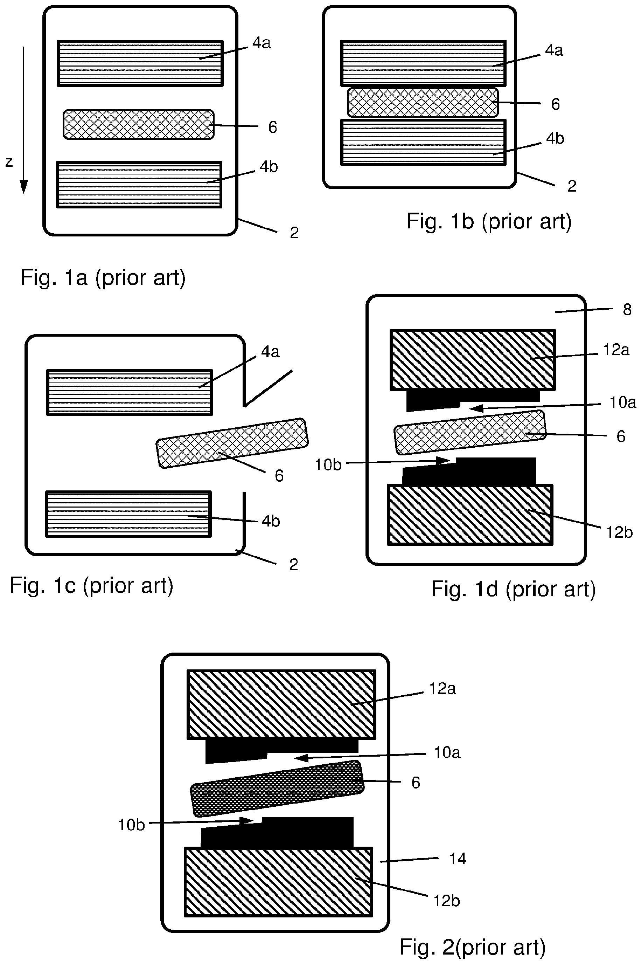

Figs. 1a to 1d illustrate a known method for producing a thermoplastic composite component using a contact oven 2 having a pair of heating plates 4a and 4b. As shown in Fig. 1a, an appropriately configured blank 6 composed of a thermoplastic resin and reinforcement fibers is introduced between the two heating plates, which are then brought into contact with the blank applying a slight pressure, as shown in Fig. 1b. Once the blank has been heated to a temperature above the melting temperature of the thermoplastic, it is removed from the contact oven as shown in Fig. 1c and transferred to a mold 8. The mold comprises cooperating first and second inner mold walls 10a and 10b, respectively. having a predefined mold wall geometry. In the example shown, the inner mold walls are formed on a respective inner piece and each mounted on a respective die member 12a, 12b. The initially hot blank 6 is subjected to an appropriate mold pressure and thereby forms a molded part having a shape corresponding to the predefined mold wall geometry. It is then allowed to cool, whereby the desired thermoplastic composite component is obtained.

Fig. 2 illustrates a further known method also known as "variotherm process", in which the heating and pressing steps are carried out in a single "variotherm" device 14 which the die members 12a and 12b can be heated and cooled in a controlled manner. In particular, this process allows introducing the blank in a cold or slightly preheated state. It is then heated up to a temperature above the melting temperature of the thermoplastic in an analogous manner as with the contact oven of the device shown in Fig. 1. Subsequently, the hot blank 6 is subjected to an appropriate mold pressure and thereby forms a molded part having a shape corresponding to the predefined mold wall geometry. It is then allowed to cool or actively cooled down, whereby the desired thermoplastic composite component is obtained.

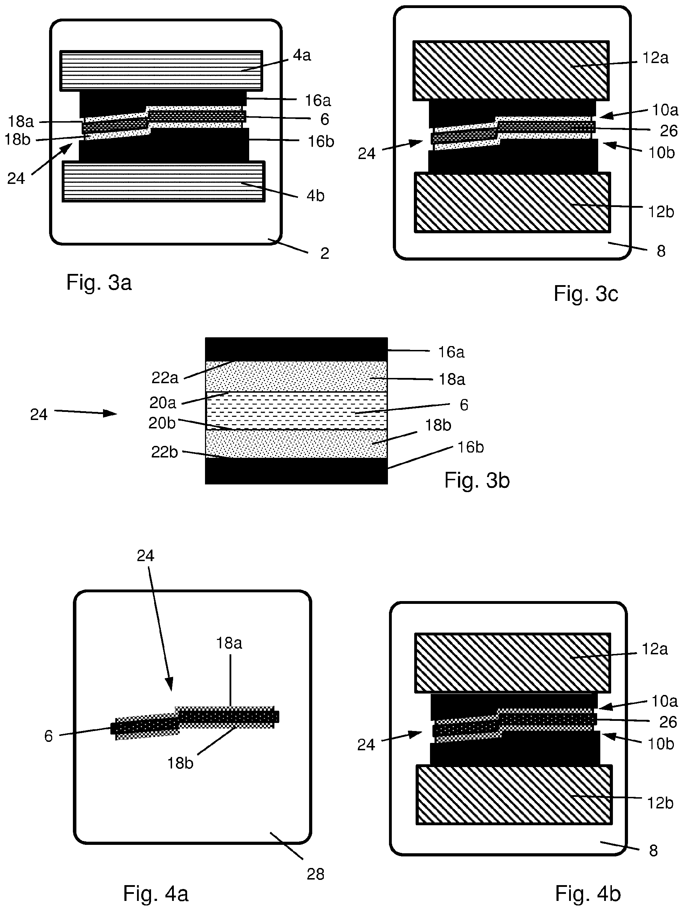

Fig. 3 illustrates a first embodiment of the present invention. As shown in Fig. 3a, an appropriately configured blank 6 composed of a thermoplastic resin and reinforcement fibers is introduced between the two heating plates 4a and 4b of a contact oven 2. The two heating plates each have a heating surface 16a, 16b which is oriented towards the embedded blank and which has a shape that substantially corresponds to the desired geometry. Also shown in Fig. 3a is that the blank 6 is embedded between a first auxiliary tool 18a and a second auxiliary tool 18b. As seen from the enlarged view of Fig. 3b, each auxiliary tool has a contact surface 20a, 20b oriented towards the blank and a non-contact surface 22a, 22b oriented away from the blank. All of the contact surfaces have a shape which substantially corresponds to the predefined mold wall geometry.

Once the sandwich structure 24 consisting of the blank 6 and the embedding auxiliary tools 18a, 18b has been heated to a temperature above the melting temperature of the thermoplastic, it is removed from the contact oven 2 and transferred to a mold 8, as shown in Fig. 3c. The mold comprises cooperating first and second inner mold walls 10a and 10b, respectively, having a predefined mold wall geometry. The initially hot sandwich structure 24 is subjected to an appropriate mold pressure and thereby forms a molded part 26 having a desired shape and still embedded within the auxiliary tools. The sandwich structure 24 is then removed from the mold and allowed to cool. Subsequently, the auxiliary tools 18a and 18b are removed, leaving the desired thermoplastic composite component. The auxiliary tools can subsequently be used for the production of a further thermoplastic composite component.

Fig. 4 illustrates a further embodiment of the invention in which the heating step is carried out in a hot air oven 28. As shown in Fig. 4a, one starts by introducing an initially cold sandwich structure 24 consisting of the blank 6 and the embedding auxiliary tools 18a, 18b followed by heating to a temperature above the melting temperature of the thermoplastic. Thereafter, the sandwich structure 24 is removed from the hot air oven 28 and transferred to a mold 8, where it is processed in the same manner as explained for the preceding embodiment.

## Claims

1. A method for producing a thermoplastic composite component, the method comprising the following steps:
a) providing a blank composed of a thermoplastic and reinforcement fibers;
b) heating the blank in an oven up to a temperature above the melting temperature of said thermoplastic;
c) pressing the heated blank in a mold which comprises cooperating first and second inner mold walls each having a predefined mold wall geometry, thereby forming a molded part having a shape corresponding to said predefined mold wall geometry;
d) cooling the molded part, whereby the thermoplastic composite component is obtained;
**characterized in that**
at least during said heating step b) and pressing step c), the blank is embedded between a first auxiliary tool and a second auxiliary tool, each auxiliary tool having a contact surface oriented towards the blank and a non-contact surface oriented away from the blank, said contact surfaces and said non-contact surfaces having a shape which substantially corresponds to said predefined mold wall geometry.

2. The method according to claim 1, wherein the heating step b) is carried out in a contact oven, the contact oven comprising a first heating tool and a second heating tool, each heating tool having a heating surface which is oriented towards the embedded blank and which has a shape that substantially corresponds to said predefined mold wall geometry.

3. The method according to claim 1, wherein the heating step b) is carried out in a hot air oven.

4. The method according to one of claims 1 to 3, wherein the pressing step c) is carried out in a heatable mold maintained at a mold temperature above the melting temperature of said thermoplastic.

5. The method according to one of claims 1 to 4, wherein said predefined mold wall geometry is substantially planar.

6. The method according to one of claims 1 to 4, wherein said predefined mold wall geometry comprises at least one discontinuity.

7. The method according to one of claims 1 to 6, wherein said auxiliary tools are made of a metal, particularly steel or aluminum.

8. The method according to one of claims 1 to 6, wherein said auxiliary tools are made of a hybrid material selected from aluminum-graphite or steel-graphite.

9. The method according to one of claims 1 to 8, wherein said auxiliary tools comprise a heating device.

10. The method according to one of claims 1 to 9, wherein the thermoplastic is selected from PP, PEI, PEEK, PPS, PA, PEAK, PEKK, PC, PES, PSU and PPA.

11. The method according to one of claims 1 to 10, wherein the reinforcing fibers are selected from carbon fibers, glass fibers, natural fibers, aramid fibers, basalt fibers, and high-melting thermoplastic fibers.

12. The method according to one of claims 1 to 11, wherein the blank provided in step a) is an unconsolidated flexible fibrous nonwoven layer of 10 to 80 wt.-% fibers of said thermoplastic and 20 to 80 wt.-% of reinforcing fibers, the blank having an areal weight of 150 to 10'000 g/m².

13. The method according to one of claims 1 to 12, wherein the heating step b) is carried out while applying a pressure between the auxiliary tools, thereby resulting in a fully consolidated blank.

14. The method according to claim 13, wherein the pressing step c) is carried out with a predefined end gap between the inner mold walls, whereby the resulting molded part is in a partially consolidated state.

15. The method according to one of claims 1 to 12, wherein the heating step b) is carried out while applying a pressure between the auxiliary tools, thereby resulting in a partially consolidated blank, and wherein the pressing step c) is carried out with a predefined end gap between the inner mold walls, whereby the resulting molded part is in a partially consolidated state.
